# FASCICULE DE BREVET EUROPEEN

(11) **EP 0 968 462 B1**
(45) Date de publication et mention de la délivrance du brevet: **06.11.2002**
(21) Numéro de dépôt: 98913870.6
(22) Date de dépôt: 10.03.1998
(51) Int. Cl.: G06F 1/00

(54) **PROCEDE DE CONTROLE DE L'ETANCHEITE D'APPLICATIONS CHARGEES DANS UN TERMINAL MULTI-APPLICATIF ET TERMINAL POUR LA MISE EN OEUVRE**
VERFAHREN ZUR INTEGRITÄTSKONTROLLE VON IN EINEM MEHRANWENDUNGSTERMINAL GESPEICHERTEN ANWENDUNGSPROGRAMMEN UND TERMINAL ZUR DURCHFÜHRUNG DIESES VERFAHRENS
METHOD FOR MONITORING THE SECURE SEGMENTATION OF APPLICATIONS LOADED IN A MULTI-APPLICATION TERMINAL AND TERMINAL IMPLEMENTING SAME

(30) Priorité: 13.03.1997 FR 9703584
(43) Date de publication de la demande: 05.01.2000
(73) Titulaire: GEMPLUS, 13881 Gémenos Cédex (FR)
(72) Inventeur: LAFFONT, Eric, F-13008 Marseille (FR); BOCES, Pierre, F-13008 Marseille (FR)
(86) Numéro de dépôt international: FR9800472
(87) Numéro de publication internationale: WO98040812

(56) Documents cités:
- EP-A- 0 457 940
- EP-A- 0 717 337
- WO-A-97/07448
- FR-A- 2 638 868
- US-A- 5 224 160
- FERREIRA R C: "THE SMART CARD: A HIGH SECURITY TOOL IN EDP" PHILIPS TELECOMMUNICATION REVIEW, vol. 47, no. 3, 1 septembre 1989, pages 1-19, XP000072642

## Description

La présente invention concerne un procédé de contrôle de l'étanchéité d'applications chargées dans un terminal multi-applicatif, lesdites applications ayant une structure prédéterminée ainsi qu'un terminal pour la mise en oeuvre du procédé.

Elle a pour objectif notamment et principalement d'assurer la sécurité du cloisonnement de plusieurs applications ou logiciels applicatifs dans un terminal muti-applicatif.

Elle vise également à contrôler le cloisonnement des applications contenues dans un terminal multi-applicatif en cas de mise à jour ou d'évolution de celles-ci.

Selon le document US5224160, il est connu de protéger des programmes en les codant et en mémorisant une clé de contrôle dans la mémoire d'un terminal. Pour vérifier l'étanchéité des programmes, on les code à nouveau de la même manière et on vérifie que le code obtenu correspond à celui qui a été mémorisé. Cette méthode nécessite un calcul relativement long et complexe, ce qui présente un grand inconvénient et il peut être intéressant de trouver une autre solution.

### Description.

La présente invention va être décrite à l'appui des figures suivantes:
La figure 1 représente une vue synoptique d'une architecture logicielle d'un terminal.

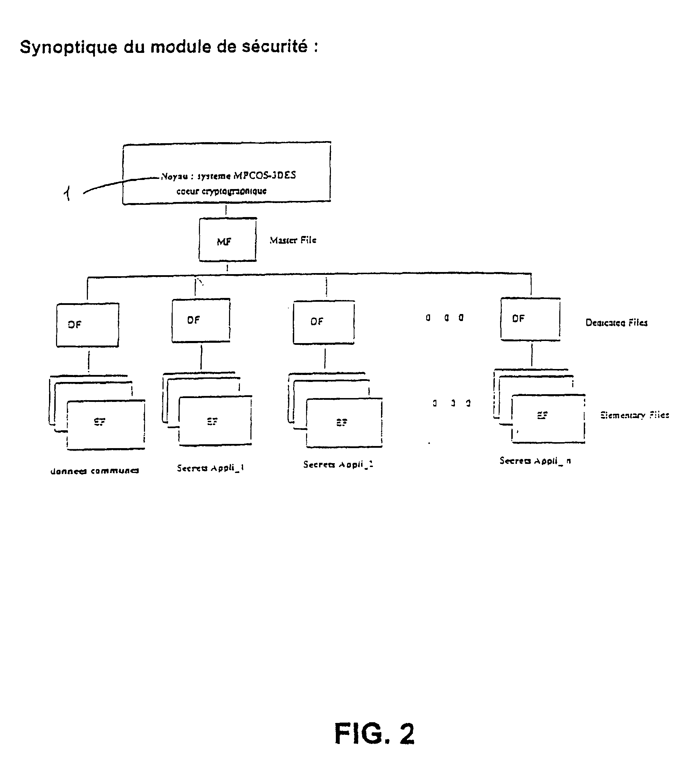

La figure 2 représente une vue synoptique d'un module de sécurité.

### On décrit tout d'abord le procédé de l'invention.

Définition préalable: on appelle structure de l'application au sens de l'invention, l'espace mémoire occupé par la zone de programme applicatif et par la zone de données applicatives de l'application considérée.

Conformément à l'invention, telle que définie dans les revendications 1 et 9, le procédé de contrôle de l'étanchéité d'applications chargées dans un terminal multi-applicatif, lesdites applications ayant une structure prédéterminée, comprend les étapes énumérées ci-après.

Il consiste dans un mode de réalisation préféré à doter le terminal d'un module de sécurité comprenant une mémoire non volatile, puis à charger ladite mémoire du module de sécurité avec une image de la structure de chaque application en terme de programme ou de données, à comparer sa structure avec son image contenue dans le module de sécurité préalablement à l'exécution d'au moins une desdites applications, et à valider le démarrage de l'exécution de l'application en cas d'adéquation et à la lancer.

On comprend qu'ainsi, seules des applications qui ont conservées leur intégrité peuvent être exécutées. On a donc la garantie qu'une application voisine n'a pas empiété sur l'espace mémoire de l'application à lancer, auquel cas sa structure aurait évoluée et ne correspondrait plus à son image initialement stockée et qui atteste de son intégrité.

En variante, ces étapes ci-dessus consistant à charger, comparer et à valider peuvent être gérées par un noyau logiciel 1 en l'absence de module de sécurité.

Conformément à une caractéristique de l'invention, à chaque évolution de la structure d'une application, le procédé comprend une étape consistant à mettre à jour l'image de sa structure dans la module de sécurité.

Selon une caractéristique du procédé, la mise à jour peut être gérée par le noyau 1 ou par l'application elle même. Un programme supplémentaire de type connu est prévu à cet effet dans le noyau 1 ou l'application.

De préférence, pour améliorer la sécurité, la mise à jour est contrôlée par ledit module de sécurité. Le contrôle peut s'effectuer par une procédure de chiffrement/déchiffrement ou par une procédure de présentation préalable d'un ou plusieurs codes confidentiels.

### On va décrire maintenant l'architecture logicielle d'un terminal.

Selon l'invention, le terminal multi-applicatif comporte outre sa structure de type connu, des moyens de mémorisation pour stocker plusieurs logiciels applicatifs et des moyens de type programme pour contrôler l'étanchéité dedits logiciels applicatifs chargés. Le terminal peut comprendre de préférence un module de sécurité comportant une mémoire non volatile.

Les moyens tels que des programmes exécutables chargées dans des mémoires sont aptes à charger ladite mémoire du module de sécurité avec une image de la structure de chaque application en terme de programme ou de données.

Préalablement à l'exécution d'au moins une desdites applications, ces programmes mentionnés précédemment sont aptes à comparer sa structure avec son image contenue dans le module de sécurité et en cas d'adéquation, ils sont aptes également à valider le démarrage de l'exécution de l'application et à la lancer.

Dans le cas contraire, le terminal est mis dans l'impossibilité d'exécuter l'application considérée. Un signal peut être émis par le terminal, et être exploité de toute manière connue dans le domaine des cartes à puce, par exemple inhiber un signal de restitution de carte, ou avertir une autorité titulaire des applications ou une autorité de contrôle, ou bloquer le terminal en totalité ou en partie pour une ou plusieurs applications.

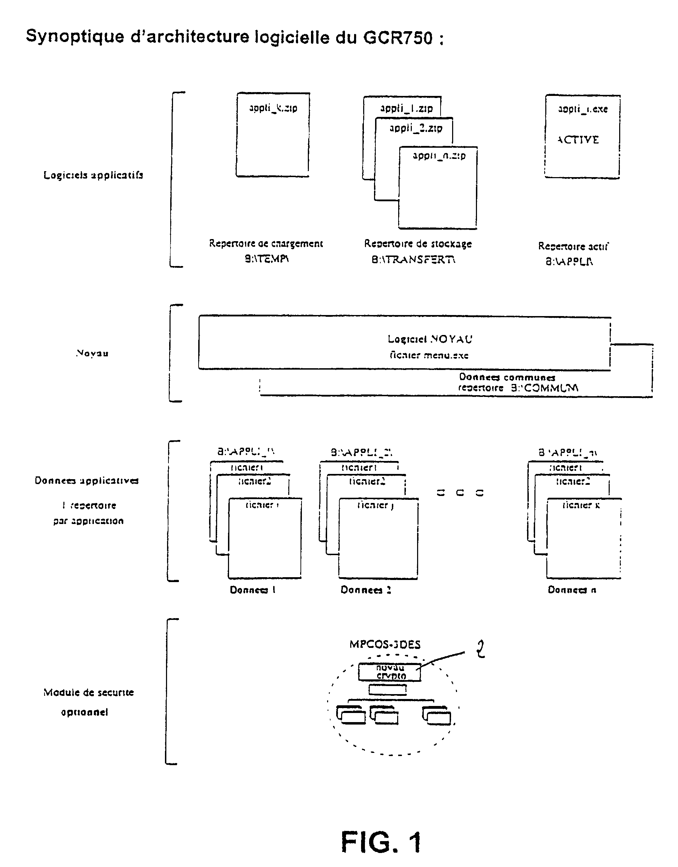

A titre d'exemple de structure d'une application on se reportera maintenant sur la figure 1, représentant l'architecture logicielle d'un terminal référencé GCR750, se trouvent plusieurs logiciels applicatifs ou applications chargées telles que Appli 1.zip, appli-2.zip, appli.n.zip.

Il peut comporter un noyau pour assurer notamment la gestion des différentes applications.

Le terminal comporte dans une mémoire, des données applicatives correspondant respectivement à chaque application ci-dessus; dans l'exemple, chaque ensemble de données correspondant à une application est stocké dans un répertoire.

Il comporte de préférence également un module de sécurité comportant au moins une mémoire non volatile. Ce module de sécurité peut comporter un microprocesseur et un noyau logiciel 2.

Pour illustrer la structure d'une application, on considère par exemple celle de l'appli.1.zip. L'application est constituée d'un programme et d'un ensemble de données. Le programme correspondant à l'appli.1 est rangé dans le répertoire B:\TRANSFERT\ sous le nom de fichier appli1.zip. Ce fichier possède certaines caractéristiques telles que sa taille, la date, l'heure, et des attributs (non représentés).

En ce qui concerne les données correspondant à l'application 1, elles sont rangées dans le répertoire B:\ appli.1 sous forme de fichiers dont les caractéristiques sont connues de la même manière que ci-dessus: taille, date, heure, attributs.

Le stockage de l'image de la structure consiste à prendre les éléments ci-dessus identifiés dans cet exemple par le nom du répertoire, le nom du fichier, et les caractéristiques.

En variante, il est possible d'identifier l'espace mémoire où se trouvent rangés les constituants d'une application simplement par des adresses qui en délimitent le début et la fin.

| | |
|---|---|
| **OBJECTIF** | 3 |
| | |
| **TABLEAU RECAPITULATIF** | 3 |
| | |
| **DEFINITIONS** | 5 |
| | |
| **ARCHITECTURE MATERIELLE** | 6 |
| **Un coeur PC** | 6 |
| **Un module de sécurité optionnel** | 6 |
| | |
| **ARCHITECTURE LOGICIELLE MULTI-APPLICATIVE** | 6 |
| **Principes d'étanchéité du GCR750** | 6 |
| Les ressources logicielles | 6 |
| Les ressources matérielles | 7 |
| **Synoptique d'architecture logicielle du GCR750** | 8 |
| Synoptique du module de sécurité | 9 |
| | |
| **OPTION MODULE DE SECURITE** | 9 |
| **Protection du code** | 9 |
| Chargement | 9 |
| **Protection des données** | 10 |
| | |
| **CONCLUSION** | 10 |

### Définitions :

Les définitions ci-dessous sont extraites d'un document de travail édité par le groupement Carte Bancaire : Spécifications d'un terminal multi-applications étanche.

Les principes de base du GCR750 reposent sur leurs recommandations.

### Etanchéité :

L'étanchéité est un concept d'organisation, de spécification et de description de l'architecture et de l'exploitation d'un terminal supportant plusieurs applications indépendantes sans interaction mutuelle.

### Noyau :

Le noyau est l'entité logicielle constituée des traitements essentiels et communs aux logiciels applicatifs, gérant leur cohabitation sans interaction.

### Application :

Une application est l'ensemble des traitements répondant aux besoins d'un émetteur de cartes ou d'un service spécifique.

### Logiciel applicatif :

Un logiciel applicatif est le logiciel spécifique à un émetteur de cartes ou à une application fonctionnelle.

### Objectif :

Assurer dans le GCR750 un niveau de sécurisation suffisant pour permettre au lecteur un fonctionnement en multi-applicatif.

### Tableau récapitulatif :

Le tableau récapitulatif ci-dessous résume les divers niveaux de protection possibles sur un GCR750 :

*Dans l'état actuel* l'architecture matérielle du GCR750 assure un niveau acceptable d'étanchéité comme l'indique le tableau ci-dessous.

*En option* il est prévu d'implémenter un niveau de sécurisation renforcé avec l'ajout d'un module de sécurité qui stockerait les droits et secrets de chaque application.

Le terminal serait standard et le module de sécurité viendrait le personnaliser.

| **Entité** | **Phase** | **Sécurité** | **Présence** | **Mécanisme** |
|---|---|---|---|---|
| **Code** | Chargement | Authentification | *En option* | Stockage de clés secrètes dans module de sécurité ; Accès à la mémoire par authentification : le propriétaire du lecteur, seul possesseur des clés est maître du chargement de toute nouvelle application. |
| | | | En option * | Partage d'une clé de session pour encrypter les échanges. |
| | | Confidentialité | *En option* * | Chargement d'application cryptée et décryptage par triple DES, via module de sécurité. |
| | | Intégrité | oui | Vérification du CRC des fichiers en fin de téléchargement. |
| | Exécution | Intégrité | oui | Vérification du CRC de l'application à lancer : mécanisme à postériori. |
| | | Etanchéité | oui | Décomposition d'une seule application avant son lancement. Chargement et exécution en espace RAM du code : limitation majeure des risques d'écrasement des autres programmes stockés en espace FLASH. Structure de fichiers et répertoires. |
| | | | *En option* | Le module de sécurité renferme l'image de sa structure mémoire applicative du terminal. Le lancement d'une application peut être soumis à vérification préalable par comparaison avec l'image dans le module. |
| | Sauvegarde | Rétention | oui | Fiabilité du circuit de mémoire FLASH EPROM. |
| **Données** | Lecture/ écriture | Confidentialité | *En option* * | Possibilité de cryptage/décryptage par triple DES, via module de sécurité. |
| | Lecture/ écriture | Étanchéité | oui | Exécution en Espace RAM : utilisation des variables d'une seule application en même temps. |
| | | | *En option* | Ecriture des données dans des fichiers et répertoires avec droits d'accès limités par le module de sécurité. Comme pour le code, la structure des données peut être stockée dans le module de sécurité |
| | Ecriture | Intégrité | *En option* | Vérification avant l'écriture des droits d'accès |
| | Sauvegarde | Rétention | oui | Recopie systématique des données par le système en Flash EPROM. Fiabilité du circuit de mémoire Flash EPROM. |

| | | | | |
|---|---|---|---|---|
| * L'option chiffrement/déchiffrement peut être coûteuse en temps d'exécution si la taille des données à traiter est importante. Par ailleurs, l'utilisation d'algorithmes types DES est soumis à un agrément de la part du SCSSI. | | | | |

### Architecture matérielle

### Un coeur PC :

Le lecteur GCR750 est doté d'un coeur PC permettant une organisation des programmes et données sous forme de fichiers, et leur classement dans des répertoires.

Toute application stockée sur disque en mémoire Flash EPROM est chargée en mémoire vive DRAM avant d'y être exécutée.

Cette séparation des espaces de rangement et d'exécution permet d'éviter tout risque d'écrasement de code et de variables.

### Un module de sécurité optionnel :

Le GCR750 sait gérer un module de sécurité (SAM) permettant d'effectuer diverses opérations (exemple d'un SAM à base de MPCOS-3DES de Gemplus)
- Stockage des clés DES ou triple DES et de codes confidentiels
- Stockage de données sensibles dans des fichiers par application
- Signature/Vérification de signatures
- Vérification de codes confidentiels
- Chiffrement/déchiffrement par DES ou triple DES

### Architecture logicielle multi-applicative :

### Principes d'étanchéité du GCR750 :

L'organisation du GCR750 fait apparaître des modules de matériel et de logiciel qui constituent les ressources de base du lecteur :

### Les ressources logicielles :

Elles sont composées de 3 éléments :
- Un noyau chargé de gérer les aspects communs aux applications et d'assurer l'étanchéité de leurs systèmes respectifs : c'est le rôle qui est assigné à l'exécutable « MENU.EXE »
- Un ou plusieurs logiciels applicatifs pouvant être chargés ou téléchargés séparément sans interaction mutuelle:
   En effet, pendant la phase de chargement les fichiers sont stockés dans un répertoire temporaire B:\TEMP\.Ces fichiers exécutables sont transmis sous forme compressée et assortie d'un CRC.
   *En option les fichiers peuvent être transmis cryptés par DES ou triple DES, et décryptés dans le GCR750 via le module de sécurité.*
   Ces fichiers compressés sont chargés et stockés individuellement dans le répertoire B:\TRANSFERT\.
   Le logiciel applicatif sélectionné par l'utilisateur est vérifié et décompressé par le noyau, puis rangé en B:\APPLI\ sous sa forme exécutable. Puis il est exécuté dans la mémoire vive du lecteur.
- Des données qui, à la disposition du noyau ou des logiciels applicatifs, sont accessibles uniquement en fonction des droits d'accès établis :
   Ces différentes ressources sont soit communes soit privées

### Données communes :

Les données communes sont stockées en fichiers dans un répertoire commun à toute application : B:\COMMUN\.

### Données privées :

Les ressources privées sont strictement réservées à l'application qui en est propriétaire.

Dans le GCR750, chaque application utilisera un répertoire où elle pourra ranger ses fichiers de données privées éventuellement chiffrés et signés.

### Les ressources matérielles :

Elles sont constituées des éléments suivants :
les lecteurs de cartes à microcircuits ;
le clavier, l'afficheur, le buzzer, l'horloge temps réel ;
le module de sécurité, *en option.*

### Option module de sécurité :

Le module de sécurité permet de renforcer la sécurisation des applications en ajoutant les contrôles suivants :

### Protection du code :

### Chargement :

### Authentification :

Le chargement d'un nouvel applicatif est sécurisé par les mécanismes d'authentification basés sur le partage de clés secrètes entre le lecteur et le chargeur.

Ces clés sont stockées dans le module de sécurité. Le possesseur des clés est maître du chargement de nouvelles applications.

Aussi tout chargement d'une nouvelle application est-il soumis à autorisation du détenteur des secrets.

### Confidentialité :

Afin de garantir un niveau de confidentialité acceptable sur la liaison série filaire le transfert de fichiers cryptés est possible. Les principes utilisables sont les algorithmes à la clé secrète comme le DES ou le triple DES. (Date Encryption System) qui utilisent une clé de session, c.a.d. la clé secrète du module de sécurité diversifiée sur un nombre aléatoire.

Cependant l'option chiffrement/déchiffrement par DES peut être coûteuse en temps d'exécution si la taille des données à traiter est importante. Par ailleurs l'utilisation d'algorithmes types DES est soumise à un agrément de la part du SCSSI.

### Etanchéité :

Le module de sécurité peut renfermer l'image de la partition mémoire applicative du terminal : toute exécution d'un programme peut être soumise à un contrôle préalable d'intégrité par comparaison entre la structure mémoire du lecteur et son image stockée dans le module de sécurité.

### Protection des données :

Le module de sécurité offre plusieurs niveaux de sécurité combinables :
- La demande de présentation de code confidentiel par application.
- Le stockage par application de données privées sous forme de fichiers de données directement dans le module de sécurité, avec possibilité de verrouillage des accès par code confidentiel.
- Le stockage de l'image de la structure mémoire des données dans le module de sécurité.
- Le cryptage de données privées stockées en Flash du GCR750.
   Ainsi les données privées sensibles stockées dans les fichiers peuvent être rendues illisibles pour une autre application si elles sont stockées sous forme cryptée.
- La signature cryptographique des fichiers de données privées en mémoire du lecteur. En appliquant à ces fichiers de données une signature cryptographique, l'application s'assure qu'elle seule peut en modifier le contenu.

## Revendications

1. Procédé de contrôle de l'étanchéité d'applications chargées dans un terminal multi-applicatif, lesdites applications ayant une structure prédéterminée, ledit procédé comprenant les étapes suivantes consistant:
- à doter le terminal d'un module de sécurité comprenant une mémoire non volatile,
- à charger ladite mémoire non volatile du module de sécurité avec une image de la structure de chaque application en terme de programme ou de données,
- préalablement à l'exécution d'au moins une desdites applications, à comparer sa structure avec son image contenue dans le module de sécurité,
- à valider le démarrage de l'exécution de l'application en cas d'adéquation et à la lancer.

2. Procédé selon la revendication 1, **caractérisé en ce que** le chargement, la comparaison et la validation et le lancement sont gérés par un programme de gestion dit noyau 1

3. Procédé selon la revendication 1 ou 2, **caractérisé en ce que**, à chaque évolution de la structure d'une application, il comprend une étape consistant à mettre à jour l'image de sa structure dans la module de sécurité.

4. Procédé selon la revendication 3, **caractérisé en ce que** la mise à jour est gérée par le noyau.

5. Procédé selon la revendication 3, **caractérisé en ce que** la mise à jour est gérée par l'application.

6. Procédé selon la revendication 3 à 5, **caractérisé en ce que** la mise à jour est contrôlée par ledit module de sécurité.

7. Procédé selon la revendication 6, **caractérisé en ce que** le contrôle s'effectue par une procédure de chiffrement/déchiffrement contrôlé par un noyau logiciel 2 du module de sécurité.

8. Procédé selon la revendication 6, **caractérisé en ce que** le contrôle s'effectue par une procédure de présentation préalable d'un ou plusieurs codes confidentiels.

9. Terminal multi-applicatif **caractérisé en ce qu'**il comporte des moyens pour contrôler l'étanchéité d'applications chargées, lesdites applications ayant une structure prédéterminée, lesdits moyens comprenant un module de sécurité comportant une mémoire non volatile et étant aptes
- à charger ladite mémoire non volatile du module de sécurité avec une image de la structure de chaque application en terme de programme ou de données,
- préalablement à l'exécution d'au moins une desdites applications, à comparer sa structure avec son image contenue dans le module de sécurité,
- à valider le démarrage de l'exécution de l'application en cas d'adéquation et à la lancer.

## Claims

1. Method of checking the impermeability of applications loaded in a multi-application terminal, said applications having a predetermined structure, the said method comprising the following steps consisting of:
- providing the terminal with a security module comprising a non-volatile memory,
- loading the said non-volatile memory of the security module with an image of the structure of each application in terms of program or data,
- prior to the execution of at least one of the said applications, comparing its structure with its image contained in the security module,
- validating the start of the execution of the application in the event of a match and launching it.

2. Method according to Claim 1, **characterised in that** the loading, the comparison, the validation and the launch are managed by a management program known as a kernel 1.

3. Method according to Claim 1 or 2, **characterised in that**, at each change in the structure of an application, it comprises a step consisting of updating the image of its structure in the security module.

4. Method according to Claim 3, **characterised in that** the updating is managed by the kernel.

5. Method according to Claim 3, **characterised in that** the updating is managed by the application.

6. Method according to Claims 3 to 5, **characterised in that** the updating is checked by the security module.

7. Method according to Claim 6, **characterised in that** the check is carried out by an enciphering/deciphering procedure checked by a software kernel 2 of the security module.

8. Method according to Claim 6, **characterised in that** the check is made by a procedure of prior presentation of one or more confidential codes.

9. Multi-application terminal, **characterised in that** it has means for checking the impermeability of applications loaded, the said applications having a predetermined structure, the said means comprising a security module having a non-volatile memory and being able to
- load the said non-volatile memory of the security module with an image of the structure of each application in terms of program or data,
- prior to the execution of at least one of the said applications, comparing its structure with its image contained in the security module,
- validating the start of the execution of the application in the event of a match and launching it.

## Patentansprüche

1. Verfahren zur Dichtheitsprüfung von in einem Multiapplikationsterminal geladenen Applikationen, wobei die besagten Applikationen eine vorherbestimmte Struktur aufweisen, wobei das besagte Verfahren die folgenden Etappen umfasst :
- Ausrüstung des Terminals mit einem einen nicht flüchtigen Speicher aufweisenden Sicherheitsmodul,
- Laden des besagten nicht flüchtigen Speichers des Sicherheitsmoduls mit einem Bild der Struktur jeder Applikation in Form eines Programms oder von Daten,
- vor der Ausführung mindestens einer der besagten Applikationen, Vergleich ihrer Struktur mit ihrem im Sicherheitsmodul enthaltenen Bild,
- Startbestätigung der Ausführung der Applikation bei Übereinstimmung und Starten derselben.

2. Verfahren nach Anspruch 1, **dadurch gekennzeichnet, dass** das Laden, der Vergleich und die Bestätigung sowie der Start von einem Kern 1 genannten Verwaltungsprogramm gesteuert werden.

3. Verfahren nach Anspruch 1 oder 2, **dadurch gekennzeichnet, dass** es bei jeder Weiterentwicklung der Struktur einer Applikation eine Etappe zur Aktualisierung des Bildes ihrer Struktur im Sicherheitsmodul umfasst.

4. Verfahren nach Anspruch 3, **dadurch gekennzeichnet, dass** die Aktualisierung vom Kern gesteuert wird.

5. Verfahren nach Anspruch 3, **dadurch gekennzeichnet, dass** die Aktualisierung von der Applikation gesteuert wird.

6. Verfahren nach Anspruch 3 bis 5, **dadurch gekennzeichnet, dass** die Aktualisierung vom besagten Sicherheitsmodul geprüft wird.

7. Verfahren nach Anspruch 8, **dadurch gekennzeichnet, dass** die Prüfung mittels eines von einem Softwarekern 2 des Sicherheitsmoduls kontrollierten Verschlüsselungs-/ Entschlüsselungs-Verfahrens durchgeführt wird.

8. Verfahren nach Anspruch 6, **dadurch gekennzeichnet, dass** die Prüfung mittels eines vorherigen Präsentationsverfahrens einer oder mehrerer Geheimcodes durchgeführt wird.

9. Multiapplikationsterminal, **dadurch gekennzeichnet, dass** es Mittel umfasst, um die Dichtheit der geladenen Applikationen zu prüfen, wobei die besagten Applikationen eine vorherbestimmte Struktur aufweisen, wobei die besagten Mittel ein Sicherheitsmodul umfassen, das einen nicht flüchtigen Speicher enthält, und geeignet sind:
- den besagten nicht flüchtigen Speicher des Sicherheitsmoduls mit einem Bild der Struktur jeder Applikation in Form eines Programms oder von Daten zu laden,
- vor der Ausführung mindestens einer der besagten Applikationen, ihre Struktur mit ihrem im Sicherheitsmodul enthaltenen Bild zu vergleichen,
- den Start der Ausführung der Applikation bei Übereinstimmung zu bestätigen und sie zu starten.
